## Europäisches Patentamt
## European Patent Office
## Office européen des brevets

(11) Publication number: **0 030 936**
**B1**

(12) **EUROPEAN PATENT SPECIFICATION**

(45) Date of publication of patent specification: **20.03.85**

(21) Application number: **81200203.8**

(22) Date of filing: **08.08.78**

(60) Publication number of the earlier application in accordance with Art. 76 EPC: **0 001 874**

(51) Int. Cl.⁴: **B 29 C 55/22**

(54) **A method for producing a shaped article comprising two closely-spaced substantially parallel walls enclosing a volume therebetween which is filled with foam.**

(30) Priority: **23.08.77 GB 3526377**
**23.03.78 GB 1167778**

(43) Date of publication of application:
**24.06.81 Bulletin 81/25**

(45) Publication of the grant of the patent:
**20.03.85 Bulletin 85/12**

(84) Designated Contracting States:
**BE DE FR GB NL SE**

(56) References cited:
**DE-A-1 147 209**
**DE-A-1 629 543**
**DE-A-1 901 828**
**FR-A-2 094 092**
**FR-A-2 110 196**
**US-A-3 636 151**
**US-A-3 736 201**
**US-A-3 969 314**

(73) Proprietor: **IMPERIAL CHEMICAL INDUSTRIES PLC**
**Imperial Chemical House Millbank**
**London SW1P 3JF (GB)**

(72) Inventor: **Cogswell, Frederic Neil**
**67 Daniells**
**Welwyn Garden City Hertfordshire (GB)**
Inventor: **Mitchell, David Thomas**
**25 Windhill**
**Welwyn Garden City Hertfordshire (GB)**

(74) Representative: **Rhind, John Lessels et al**
**Imperial Chemical Industries PLC Legal Department: Patents PO Box No 6 Bessemer Road**
**Welwyn Garden City Herts AL7 1HD (GB)**

# Description

The invention relates to a method for producing shaped articles of thermoplastic polymeric materials using blow moulding techniques. Such processes involve an initial step of providing a hollow preform which is then inflated to conform to the shape of a surrounding mould.

When articles are formed from thermoplastic materials the properties of the material may be modified by dispersing a suitable filler throughout the material. Thus, for example, bulky fillers, such as hollow siliceous microspheres or cheap fillers such as talc or mineral limestone, may be introduced to reduce material costs or a fibrous filler may be added to improve physical properties such as rigidity, tensile yield stress, impact strength and heat distortion temperature. Most effective compositions generally have ratios of filler to thermoplastic material in the range of from 2:8 to 4:6 by weight, the precise optimum proportions depending on the actual filler used and the effect desired.

US Patent No. 3636151 discloses the production of a hollow plastics article with two closely-spaced substantially parallel walls enclosing two separate cavities therebetween by the simultaneous blow-moulding of two adjacent tubular unfilled plastics parisons. Foam may be introduced into the cavities.

US Patent No. 3969314 discloses a method for mixing a plastic and fillers in which the fillers are initially subjected to intensive predrying, the resultant mixture being said to be particularly suited for the production of blown hollow bodies which serve predominantly as containers for liquids or powders, such as detergents. Isotropic fillers, such as chalk and talcum, may be employed in filler:plastic mixing ratios between 10:90 and 50:50, preferably between 30:70 and 40:60. There is no exemplification therein of anisotropic fillers, or any indication that problems existed in the blow-moulding of plastic containing high proportions of such fillers.

In our US Patent specification No. 3 980 744, we describe and claim a method for producing hollow articles which comprises extruding a thermoplastic polymeric material, initially in a molten state, through a die having a mandrel for constraining the material into a tubular shape and producing thereby a tubular extrudate having an outer surface and an inner surface, coextruding between the die and the outer surface of the polymeric material, a liquid having a freezing temperature lower than that of the polymeric material; cooling the liquid and the outer surface of the polymeric material during their passage through the die, to a temperature below the freezing temperature of the polymeric material but above the freezing temperature of the liquid, while maintaining the inner surface of the polymeric material molten, squeezing the extrudate at suitable intervals to fuse the molten inner surface together and thereby seal discrete lengths, and inflating the sealed lengths to conform to a surrounding mould to thereby produce the shaped article, (referred to hereinafter as the "method of the kind specified"). In this method, a thin layer of the thermoplastic material is stiffened by the cooling action of the die, and gives support to the tubular preform as it extrudes prior to moulding. This is of particular advantage for supporting large preforms and stiffening very mobile materials, and various examples employing polyolefins, nylons and polycarbonates are described in the aforesaid US Patent specification No. 3 980 744.

We have now found that the method of the kind specified can be applied to a thermoplastic polymeric material containing an anisotropic filler, the ratio of anisotropic filler to thermoplastic polymeric material being at least 15:85 by weight and equal to or less than 4:6 by weight, to produce articles having two closely-spaced, substantially parallel walls, which are usually laminar in form and may include trays, car body panels, chairs and other such articles of furniture. For such articles, a low inflation ratio. e.g. 1:1, is generally preferred.

The maximum ratio of filler to thermoplastic material which can be used depends mainly on the nature of the filler. For example, compositions containing large proportions of anisotropic fillers such as glass fibres, become increasingly difficult to extrude, and for this reason the proportion of anisotropic filler to polymeric material is equal to or less than 4:6 by weight.

Double-walled articles of the kind referred to tend to have only a low resistance to twist, even when containing a high proportion of fibrous filler. However the stiffness of such articles can be improved by filling the space between the two walls with foam. Thus the method now provided is one which comprises moulding a sealed length of extrudate into an article with two closely-spaced substantially parallel walls enclosing a volume therebetween, injecting a foamable composition into the enclosed volume and allowing or causing the composition to foam while the article is held within a constraining means constructed to prevent outward displacement of the spaced-apart walls by pressure from the foaming composition. The constraining means is preferably the mould used to shape the article.

In order that the thermoplastic material shall conform accurately to the shape of the mould, the pressure used to inflate the sealed lengths of extrudate during shaping of the article must generally be higher than that which will start to inhibit foaming, even when the inflation ratio is low, e.g. 1:1 or less. It is therefore preferred to cool the mould after inflation of the length of polymeric material to harden the polymeric material sufficiently to retain its moulded shape, and thereafter venting the article thus formed before injecting the foamable material.

The foam is preferably a polyurethane foam for reasons of convenience, the foamable composition comprising a diisocyanate and a diol which react together in situ, and require little ancillary equipment. Polyurethanes based on diphenylmethane diisocyanate (MDI) are generally preferred on account of their rigidity and lower toxicity. Alternative kinds of foams include those which are the product of the agitation with air of a settable fluid, e.g. urea formaldehyde foam, and thermoplastic compositions which can be injected into the article while the thermoplastic is in a molten state, and which contain a blowing agent to form the foam structure before the thermoplastic sets.

The invention is illustrated by the accompanying drawings and by the description which follows hereinafter. In the drawings:

Figure 1 is a schematic foreshortened section through an extruder die during coextrusion of a thermoplastic polymeric material with a surrounding lubricant, and

Figure 2 is a section through a car roof panel with enlarged detail to show the structure.

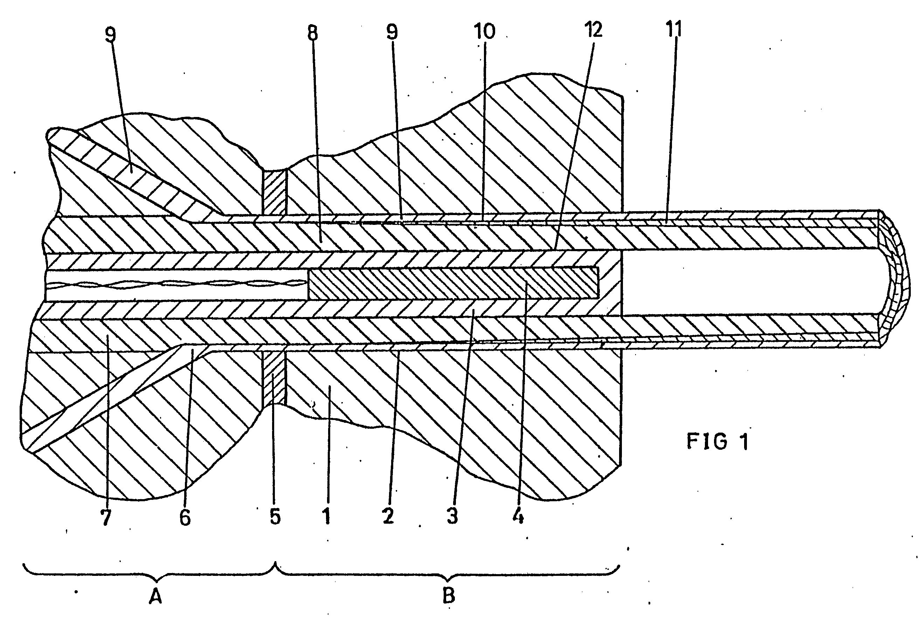

In Figure 1 of the drawing the apparatus comprises a die 1 having a cylindrical inner surface 2 and a coaxial mandrel 3. Within the mandrel is a cartridge heater 4 and part way along the die is a short annular section of insulation 5 which divides the die into two zones A, B, having separate heat-exchange systems (not shown) substantially isolated by the insulation 5. In zone A is an annular inlet 6 communicating with an axial annular passage 7 formed around the mandrel 3. The die is secured to the outlet of a conventional extruder (not shown). In use, molten thermoplastic material 8 from the extruder is forced along the axial annular passage 7, and lubricant 9 is metered through the annular inlet 6 so as to separate the outer surface 10 of the thermoplastic from the inner surface 2 of the die. Zone A is a hot zone in which the temperature of the die is substantially the temperature of the ingoing molten thermoplastic material, while zone B is cooled to below the freezing temperature of the material (but above the melting point of the lubricant), causing the thermoplastic material to form a stiffer tubular outer region 11 while its inner surface 12 is kept molten by the cartridge heater 4.

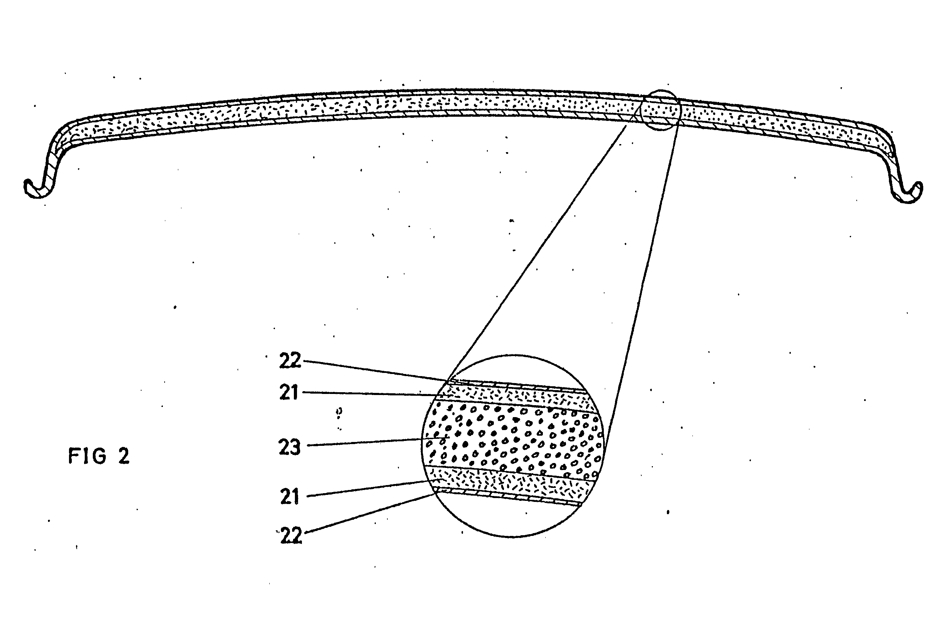

In Figure 2 of the drawings there is shown a car roof panel as an example of a rigid shaped article which can be manufactured by the present method. The panel is constructed from a glass-filled polypropylene composition 21 comprising about 30% by weight of relatively long glass fibres (e.g. average length around 5 mm). This is surrounded by a layer 22 of EVA to give a surface more acceptable for painting, and the space enclosed by the polypropylene is filled with MDI polyurethane foam 23. For this application the EVA preferably contains at least 5% by weight of vinyl acetate, desirable for paint acceptability, but more than about 15% by weight of vinyl acetate gives rise to a surface which is generally too soft for this application.

The panel is formed substantially as described below.

A composition of polypropylene melt (MFI 230°C = 3 — the melt flow indices quoted in this Example being carried out at the stated temperature according to BS 2782: Part 1/105C/1970, using a 2.16 Kg load) and glass fibre in the ratio of 7:3 by weight is fed at 210°C to the illustrated die as the main feed of thermoplastic material 8, and an ethylene/vinyl acetate (EVA) copolymer (MFI 190°C = 5) is fed as the lubricant 9, the weight ratio of the polypropylene composition to lubricant being 88:12. The die is cooled to about 100°C and the mandrel maintained at about 210°C. The composition emerges as a tubular extrudate, which is sealed at intervals by squeezing the walls so that the molten inner layer fuses. The sealed lengths are then inflated with an inflation ratio of 1:1 in a mould consisting of a female part and a male part of corresponding shape. This gives a double-walled panel with closely-spaced walls enclosing a volume therebetween. After the panel has been shaped, the mould is cooled until the polypropylene is sufficiently hard to support itself against the internal mould surface, and the interior of the panel is then vented. The polyurethane reactants are then injected into the volume enclosed by the walls and allowed to react and form the foam, while the panel remains in the mould. Support from the mould stops the panel being distorted by pressure from the expanding foam.

The high proportion of filler in the polypropylene does increase considerably the strength and stiffness of the panel in comparison with a similar panel of unfilled polypropylene. However, despite the filler, the resistance to twist of the panel in the absence of any foam filling is not good, but is improved very considerably in panels where foam has been introduced as described above. The foam also deadens the structure acoustically.

## Claims

1. A method for producing a shaped article which comprises extruding a thermoplastic polymeric material (8), initially in a molten state, through a die (1) having a mandrel (3) for constraining the material into a tubular shape and producing thereby a tubular extrudate having an outer surface (10) and an inner surface (12); coextruding between the die and the outer surface of the polymeric material, a liquid (9) having a freezing temperature lower than that of the polymeric material; cooling the liquid and the outer surface of the polymeric material during their passage through the die, to a temperature below the freezing temperature of the polymeric material but above the freezing temperature of the liquid, while maintaining the inner surface of the polymeric material molten; squeezing the extrudate at suitable intervals to fuse the molten inner surface together and thereby seal discrete lengths; and inflating a sealed length to conform to a surrounding mould, thereby to produce the shaped article, characterised in that the method is applied to a thermoplastic polymeric material containing an anisotropic filler, the ratio of filler to thermoplastic polymeric material being at least 15:85 by weight and equal to or less than 4:6 by weight, and that the sealed length of extrudate is moulded into an article with two closely-spaced substantially parallel walls enclosing a volume therebetween, a foamable composition is injected into the enclosed volume and the composition is allowed or caused to foam while the article is held within a constraining means constructed to prevent outward displacement of the spaced-apart walls by pressure from the foaming composition.

2. A method according to claim 1 in which the filler consists essentially of glass fibres.

3. A method according to either of claims 1 and 2 in which the constraining means is the mould used to shape the articles.

4. A car body panel comprising two closely-spaced substantially parallel walls enclosing a volume therebetween which is filled with foam, made by a method according to any one of claims 1 to 3, in which each wall comprises a layer of thermoplastic polymeric material containing filler surrounded by a layer of a different thermoplastic polymeric material of which the freezing temperature of the outer thermoplastic polymeric material is lower than that of the filled thermoplastic polymeric material.

**Revendications**

1. Procédé pour fabriquer un objet façonné qui comprend l'extrusion d'une matière polymère thermoplastique (8), initialement dans un état fondu, à travers une filière (1) comprenant un mandrin (3) pour amener la matière à une forme tubulaire et produire ainsi un corps extrudé tubulaire présentant une surface extérieure (10) et une surface intérieure (12), la co-extrusion, entre la filière et la surface extérieure de la matière polymère, d'un liquide (9) ayant une température de congélation inférieure à celle de la matière polymère; le refroidissement du liquide et de la surface extérieure de la matière polymère pendant leur passage à travers la filière jusqu'à une température inférieure à la température de congélation de la matière polymère mais supérieure à la température de congélation du liquide, tandis que la surface intérieure de la matière polymère est maintenue fondue; l'écrasement du corps extrudé à intervalles appropriés pour souder la surface intérieure fondue sur elle-même et sceller ainsi des longueurs discrètes; et gonflage des longueurs scellées pour les faire se conformer à un moule extérieur de manière à produire l'objet façonné, caractérisé en ce que le procédé est appliqué à une matière polymère thermoplastique contenant une charge anisotrope, le rapport de la charge à la matière polymère thermoplastique étant d'au moins 15:85 en poids et égal ou inférieur à 4:6 en poids, et que la longueur scellée du corps extrudé est moulée en un objet présentant deux parois sensiblement parallèles proches l'une de l'autre renfermant un volume, une composition propre à mousser est injectée dans le volume renfermé et la composition est amenée ou admise à mousser tandis que l'objet est maintenu dans un dispositif de contrainte construit pour empêcher le déplacement vers l'extérieur des parois proches par la pression qu'exerce la composition qui mousse.

2. Procédé suivant la revendication 1, dans lequel la charge consiste essentiellement en fibres de verre.

3. Procédé suivant la revendication 1 ou 2, dans lequel le dispositif de contrainte est le moule utilisé pour façonner les objets.

4. Panneau de carrosserie d'automobile comprenant deux parois sensiblement parallèles proches l'une de l'autre renfermant un volume qui est rempli d'une mousse, fabriqué par un procédé suivant l'une quelconque des revendications 1 à 3, dans lequel chaque paroi comprend une couche de matière polymère thermoplastique contenant une charge entourée par une couche d'une matière polymère thermoplastique différente, où la température de congélation de la matière thermoplastique extérieure est inférieure à celle de la matière thermoplastique contenant la charge.

**Patentansprüche**

1. Verfahren zur Herstellung eines Formguts, das umfaßt die Verpressung eines sich anfänglich in flüssigem Aggregatszustand befindlichen thermoplastischen Polymer-Materials (8) durch eine mit einem Dorn (3) zur zwangsweisen Pressung des Materials (8) in eine röhrenförmige Form versehene Preßform (1) und damit die Herstellung eines röhrenförmigen Preßguts mit einer Außenfläche (10) und einer Innenfläche (12), sowie die gleichzeitige Verpressung einer Flüssigkeit (9) mit niedrigerer Erstarrungstemperatur als das Polymer-Material zwischen Preßform und Außenfläche des Polymer-Materials, die Abkühlung der Flüssigkeit und der Außenfläche des Polymer-Materials während ihres Durchgangs durch die Preßform auf eine Temperatur unterhalb der Erstarrungstemperatur des Polymer-Materials jedoch oberhalb der Erstarrungstemperatur der Flüssigkeit, wobei der flüssige Aggregatszustand der Innenfläche des Polymer-Materials aufrechterhalten wird, die Einschnürung des Preßguts in geeigneten Abständen, um die flüssige Innenfläche zu verschmelzen und dadurch getrennte Längenabschnitte abzudichten, und die Aufblähung eines abgedichteten Längenabschnitts zur Anpassung an eine einschließende Form, um so das Formgut herzustellen, dadurch gekennzeichnet, daß das Verfahren bei einem thermoplastischen Polymer-Material angewendet wird, das ein anisotropes Füllmittel enthält, wobei das Gewichtsverhältnis von Füllmittel zu thermoplastischem Polymer-Material zumindest 15:85 beträgt und kleiner oder gleich 4:6 ist, und daß der abgedichtete Längenabschnitt des Preßguts zu einem Formstück mit zwei einen Hohlraum zwischen sich einschließenden etwa parallelen Wänden mit geringem Abstand geformt wird, wobei eine schäumbare Verbindung in den eingeschlossenen Hohlraum eingespritzt wird und ein Aufschäumen der Verbindung ermöglicht oder eingeleitet wird, während das Formstück innerhalb einer Preßvorrichtung gehalten wird, die derart aufgebaut ist, daß sie eine Außenverschiebung der sich im Abstand zueinander befindlichen Wände durch den von der aufschäumenden Verbindung ausgeübten Druck verändert.

2. Verfahren nach Anspruch 1, bei dem das Füllmittel hauptsächlich aus Glasfasern besteht.

3. Verfahren nach Anspruch 1 oder 2, bei der die Preßvorrichtung die Form ist, die zur Formung der Formstücke benutzt wird.

4. Fahrzeug-Karosserie-Verkleidungsteil, das nach einem Verfahren entsprechend einem der Ansprüche 1 bis 3 hergestellt ist, mit zwei in geringem Abstand stehenden, etwa parallelen Wänden, die einen Hohlraum zwischen sich einschließen, der mit Schaum gefüllt ist, bei dem jede Wand eine Schicht thermoplastischen Polymer-Materials aufweist, die Füllmittel enthält und von einer Schicht eines anderen thermoplastischen Polymer-Materials umgeben ist, wobei die Erstarrungstemperatur des äußeren thermoplastischen Polymer-Materials geringer ist als die des Füllstoff enthaltenden thermoplastischen Polymer-Materials.

FIG 1

FIG 2

22
21
23
21
22

0030936